# EUROPEAN PATENT SPECIFICATION

(11) **EP 3 182 567 B1**
(45) Date of publication and mention of the grant of the patent: **20.10.2021**
(21) Application number: 16820661.3
(22) Date of filing: 11.03.2016
(51) Int. Cl.: H02K 15/02

(54) **METHOD AND DEVICE FOR GLUING LATERAL SIDES OF STATOR CORES**
VERFAHREN UND VORRICHTUNG ZUM VERKLEBEN VON SEITENFLÄCHEN VON STATORKERNEN
PROCÉDÉ ET DISPOSITIF DE COLLAGE DES COTÉS LATÉRAUX D'UN NOYEAU STATORIQUE

(30) Priority: 06.07.2015 CN 201510393747
(43) Date of publication of application: 21.06.2017
(73) Proprietor: Shanghai Moons' Electric Co., Ltd., Shanghai 201107 (CN)
(72) Inventor: JIN, Wanbing, Shanghai 201107 (CN); NIE, Huifan, Shanghai 201107 (CN); HE, Xin, Shanghai 201107 (CN)
(74) Representative: Winter, Brandl - Partnerschaft mbB
(86) International application number: PCT/CN2016/076102
(87) International publication number: WO 2017/005006

(56) References cited:
- CN-A- 1 921 271
- CN-A- 1 921 271
- CN-A- 104 218 743
- CN-A- 104 218 743
- CN-U- 204 928 501
- JP-A- S6 082 048
- US-A- 4 614 022
- US-A1- 2008 191 579
- US-A1- 2015 097 463

## Description

### BACKGROUND OF THE INVENTION

### Technical Field

The present invention relates to a stator core, in particular to a device for gluing lateral sides of stator cores and a gluing method.

### Description of the Related Art

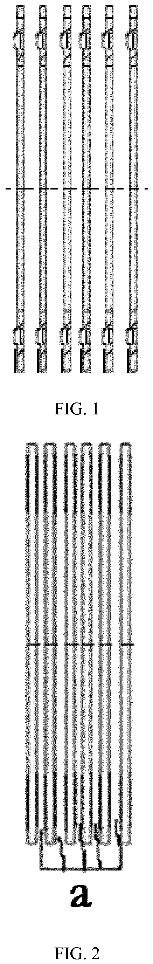

Components of micro motors are required to become smaller and smaller. For example, the size of stator cores is required to be further reduced. To reduce iron losses, the silicon steel sheets are required to get thinner and thinner. The processing of existing stator cores is as follows: each silicon steel sheet is punched with a riveting point first and then molded in turn. Finally, the silicon steel sheets are stacked to form the required rotors, as shown in Figure 1.

Such processing avoids the link of applying glue between chips when the stator chips are stacked, reduces the processing time, and can effectively enhance productivity. However, components of micro motors are also required to become smaller and smaller. For example, the size of stator cores is required to be reduced. To reduce iron losses, the silicon steel sheets are required to get thinner and thinner. During the punching of the riveting points at the thin silicon steel sheets, the silicon steel sheets may break, damaging the insulation. During stacking, due to the existence of the riveting points, the surfaces of the silicon steel sheets may be scratched, causing insulation failure between iron cores. Besides, if the riveting points are slightly staggered during stacking, the stacking thickness of the whole stator core will increase.

In order to overcome the defects of the rivet stacking process, an inter-chip gluing process reported in some literatures is as follows: a stator chip is first punched without a riveting point; glue a is applied onto a second silicon steel sheet, and a second stator chip is punched and spliced with the first piece of stator chip; the glue a is continuously applied onto a third silicon steel sheet, and a third stator chip is continuously punched and spliced with the second stator. The above operation is repeated until the required stator core is finally obtained, as shown in Figure 2.

Such process avoids the insulation problem caused by the rivet stacking process. However, due to the existence of the glue between chips, the stacking thickness may increase at last. Similarly, as the components of the micro motors get smaller and smaller, to reduce iron losses, the silicon steel sheets are required to get thinner and thinner. Then, a stator core with the same stacking thickness needs more stator chips, and more times of inter-chip gluing is likewise needed, thus prolonging the gluing process time without improvement on the device capabilities. In order to enhance productivity, the accuracy of the inter-chip glue dispenser must be higher and higher, so that the process cost will be inevitably enhanced.

Document US 2015/097463 A1 discloses stack of laminations consisting of punched laminations which are bonded together by an adhesive agent. Document CN 104 218 743 A discloses a motor iron core automatic gluing lamination high-speed stamping grading die comprising an adhesive module by which stamping and adhesion are synchronously performed and working efficiency is greatly improved. Document US 4 614 022 A discloses a method of forming a laminate core of a multiplicity of magnetic plates in a stack, including the steps of assembling the plates and applying a strip of adhesive to a surface of the stack. Document US 2008/191579 A1 relates to a stator of a motor including an upper cover, a lower cover and a silicon steel sheet set.

### BRIEF SUMMARY OF THE INVENTION

The objective of the present invention is to provide a device for gluing lateral sides of stator cores and a gluing method to overcome defects in the prior art. Stator cores are stacked in order by using a mold. Glue is uniformly sprayed on the inner sides or outer sides of the stacked stator core by using a glue spray nozzle. The present invention improves the productivity of the stator cores and overcome defects of the inter-chip gluing process.

The objective of the present invention can be fulfilled by a stator core lateral sides gluing device and a method for gluing lateral sides of stator cores according to claims 1 and 5 respectively. Further embodiments are provided in claims 2-4.

Compared with the prior art, the present invention has the following advantages:
1) Compared with the rivet stacking process, the method for gluing the lateral sides of the stator cores of the present invention is simpler and can avoid the insulation problem caused by the rivet stacking process.
2) Compared with the rivet stacking process, the process for gluing the lateral sides of the stator cores of the present invention has a higher icon core stacking coefficient.
3) Compared with the inter-chip gluing process, the method for gluing the lateral sides of the stator cores of the present invention is simple, avoids gluing during punching of the iron cores, does not need a quick response glue dispenser and reduces equipment cost.
4) Compared with the inter-chip gluing process, the process for gluing the lateral sides of the stator cores of the present invention performs stator chip punching without waiting for glue spraying between chips, can obviously reduce the production time of the stator cores, and improve productivity.
5) Compared with the rivet stacking process, the process for gluing the lateral sides of the stator cores of the present invention has a higher iron core stacking coefficient, avoiding the thickening of the stacked layer due to the existence of the glue between chips.
6) Compared with the prior art, the process for gluing the lateral sides of the stator cores of the present invention optimizes the process flow. After the punching of the last stator is completed there is no need to take out the stator cores from the mold, and the spray nozzles spray glue uniformly along with the inner sides or outer sides of the stator. After the glue has solidified, the molded stator cores can be obtained. The process saves tools and time by avoiding the steps of taking out the bulk stator sheets from the punching mold, stacking the stator sheets, gluing and molding the stator, thus saving tool cost and improving efficiency.
7) Compared with the prior art, the change mode of the process for gluing the lateral sides of the stator cores of the present invention optimizes the process flow. The stator cores are punched while the inner sides or outer sides of the partly stacked stator cores are glued. After the last stator sheet is punched and glued and the glue on the surfaces of the iron cores which are stacked in order has solidified, the finally solidified stator cores can be taken out of the stacking mold. The process saves tools and time by avoiding the steps of taking out the bulk stator sheets from the punching mold, stacking the stator sheets, gluing and molding the stator, thus saving tool cost and improving efficiency.

### BRIEF DESCRIPTION OF THE SEVERAL VIEWS OF THE DRAWINGS

Figure 1 is a schematic view of the existing rivet stacking process.
Figure 2 is a schematic view of the existing inter-chip gluing process.
Figure 3 is a structural view of the present invention.
Figure 4 is a sectional structural view of the present invention.
Figure 5 is a structural view of glued stator cores of the present invention.

### DETAILED DESCRIPTION OF THE INVENTION

The present invention is described in detail with reference to the attached drawings and embodiments.

### Embodiment 1

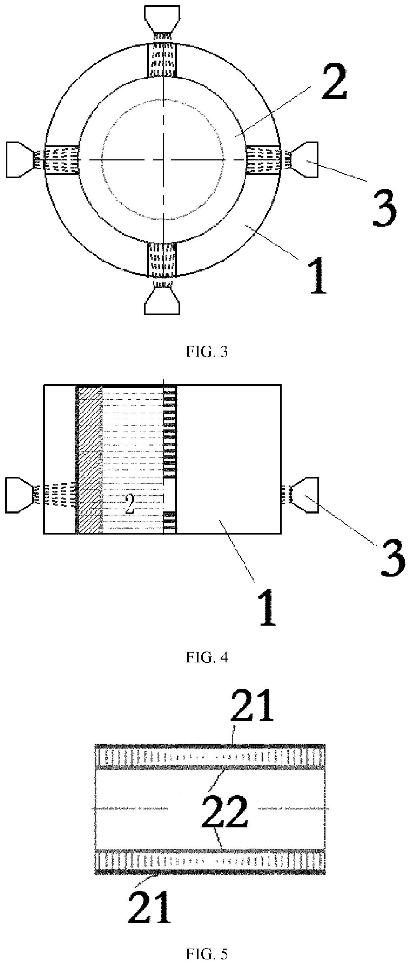

As shown in Figures 3-5, a device for gluing lateral sides of stator cores includes a silicon steel sheet stacking mold 1 used for stacking silicon steel sheets in order, and glue spray nozzles 3 which are installed on the silicon steel sheet stacking mold and aligned with the inner sides 22 or outer sides 21 of stator cores 2 to be glued.

The silicon steel sheet stacking mold 1 is internally provided with profiled cavities for arrangement of the silicon steel sheets in an orderly way. The profiled cavities are silicon steel sheets fixing grooves which are arranged at an equal interval.

A plurality of glue spray nozzles 3 are provided, which are installed on silicon steel sheet stacking mold 1 and aligned with the inner sides or outer sides of stator cores to be glued. Preferably, four glue spray nozzles 3 are provided, symmetrically installed on the silicon steel sheet stacking mold.

A method for gluing lateral sides of stator cores in this embodiment includes the following steps:
1) driving the iron-core silicon steel sheets to be automatically stacked in order within the limit of the profiled cavities of the silicon steel sheet stacking mold;
2) after the last iron-core silicon steel sheet is stacked, uniformly spraying glue onto the inner sides or outer sides of the stator cores by using the glue spray nozzles;
3) after the glue has solidified, obtaining the required stator cores.

### Example not forming part of the invention.

A method for gluing lateral sides of stator cores in this embodiment includes the following steps:
1) punching iron-core silicon steel sheets while applying glue, by using glue spray nozzles, on the inner sides or outer sides of the stator cores which are stacked in order within the limit of the profiled cavities of the silicon steel sheets;
2) after the last silicon steel sheet is punched and glued and the glue on the surfaces of the iron cores which are stacked in order has solidified, taking out the finally solidified stator cores from the silicon steel sheet stacking mold.

Others are identical with those in embodiment 1.

## Claims

1. A stator core lateral sides gluing device, **characterized by** comprising:
a silicon steel sheet stacking mold (1) internally provided with profiled cavities for arrangement of the silicon steel sheets in an orderly way and configured to be used for stacking iron-core silicon steel sheets in order; and
glue spray nozzles (3) symmetrically installed on the silicon steel sheet stacking mold (1) and configured to be aligned with inner sides (22) or outer sides (21) of lateral sides of stator cores (2) arranged in the profiled cavities and to be glued.

2. The stator cores lateral sides gluing device according to claim 1, wherein the profiled cavities are silicon steel sheets fixing grooves which are arranged at an equal interval.

3. The stator core lateral sides gluing device according to claim 1, wherein the glue spray nozzles (3) are aligned with the inner sides (22) or outer sides (21) of stator cores (2) to be glued.

4. The stator core lateral sides gluing device according to claim 1 or 3, wherein a plurality of glue spray nozzles (3) are provided, symmetrically installed.

5. A method for gluing lateral sides of stator cores with the stator core lateral sides gluing device according to claim 1, **characterized by** comprising:
1) driving the iron-core silicon steel sheets to be automatically stacked in order within the limit of the profiled cavities of the silicon steel sheet stacking mold (1);
2) after the last iron-core silicon steel sheet is stacked, uniformly spraying glue onto the inner sides (22) or outer sides (21) of lateral sides of the stator cores (2) by using the glue spray nozzles (3);
3) after the glue is solidified, obtaining the required stator cores (2).

## Patentansprüche

1. Statorkern-Seitenflächen-Klebevorrichtung, **dadurch gekennzeichnet, dass** sie
eine Siliziumstahlblech-Stapelform (1), die innen mit profilierten Hohlräumen zum Anordnen von Siliziumstahlblechen in einer geordneten Weise versehen und so konfiguriert ist, dass sie zum Stapeln von Eisenkern-Siliziumstahlblechen in einer Reihenfolge verwendet werden kann; und
Klebstoffspritzdüsen (3) aufweist, die symmetrisch an der Siliziumstahlblech-Stapelform (1) installiert und so konfiguriert sind, dass sie mit Innenseiten (22) oder Außenseiten (21) von Seitenflächen von in den profilierten Hohlräumen angeordneten und zu verklebenden Statorkernen (2) ausgerichtet sind.

2. Statorkern-Seitenflächen-Klebevorrichtung nach Anspruch 1, wobei die profilierten Hohlräume Siliziumstahlblech-Fixierungsnuten sind, die in gleichem Abstand angeordnet sind.

3. Statorkern-Seitenflächen-Klebevorrichtung nach Anspruch 1, wobei die Klebstoffspritzdüsen (3) mit den Innenseiten (22) oder den Außenseiten (21) von zu verklebenden Statorkernen (2) ausgerichtet sind.

4. Statorkern-Seitenflächen-Klebevorrichtung nach Anspruch 1 oder 3, wobei eine Mehrzahl von Klebstoffspritzdüsen (3) vorgesehen sind, die symmetrisch angeordnet sind.

5. Verfahren zum Verkleben von Seitenflächen von Statorkernen mit der Statorkern-Seitenflächen-Klebevorrichtung nach Anspruch 1, **dadurch gekennzeichnet, dass** es die folgenden Schritte aufweist:
1) Antreiben der Eisenkern-Siliziumstahlbleche, die automatisch in einer Reihenfolge innerhalb einer Grenze der profilierten Hohlräume der Siliziumstahlblech-Stapelform (1) gestapelt werden;
2) gleichmäßiges Spritzen von Klebstoff auf die Innenseiten (22) oder Außenseiten (21) der Seitenflächen der Statorkerne (2) unter Verwendung der Klebstoffspritzdüsen (3), nachdem das letzte Eisenkern-Siliziumstahlblech gestapelt ist;
3) Erhalten der gewünschten Statorkerne (2) nach dem Aushärten des Klebstoffs.

## Revendications

1. Dispositif de collage de côtés latéraux de noyau de stator, **caractérisé en ce qu'**il comprend :
un moule d'empilage de tôles d'acier au silicium (1) pourvu intérieurement de cavités profilées pour l'agencement de tôles d'acier au silicium selon une manière ordonnée et configuré pour être utilisé pour l'empilement dans l'ordre de tôles d'acier au silicium à noyau de fer ; et
des buses de pulvérisation de colle (3) montées symétriquement sur le moule d'empilage de tôles d'acier au silicium (1) et configurées de manière à être alignées avec des côtés intérieurs (22) ou des côtés extérieurs (21) de cotés latéraux de noyaux de stator (2) agencés dans les cavités profilées et devant être collés.

2. Dispositif de collage de côtés latéraux de noyau de stator selon la revendication 1, dans lequel les cavités profilées sont des rainures de fixation de tôles d'acier au silicium qui sont agencées à un intervalle égal.

3. Dispositif de collage de côtés latéraux de noyau de stator selon la revendication 1, dans lequel les buses de pulvérisation de colle (3) sont alignées avec les côtés intérieurs (22) ou les côtés extérieurs (21) de noyaux de stator (2) devant être collés.

4. Dispositif de collage de côtés latéraux de noyau de stator selon la revendication 1 ou 3, dans lequel une pluralité de buses de pulvérisation de colle (3) sont prévues, montées symétriquement.

5. Procédé de collage de côtés latéraux de noyaux de stator avec le dispositif de collage de côtés latéraux de noyau de stator selon la revendication 1, **caractérisé en ce qu'**il comprend :
1) la commande des tôles d'acier au silicium à noyau de fer de manière à être automatiquement empilées dans l'ordre dans la limite des cavités profilées du moule d'empilage de tôles d'acier au silicium (1) ;
2) après l'empilement de la dernière tôle d'acier au silicium à noyau de fer, la pulvérisation uniforme de la colle sur les côtés intérieurs (22) ou les côtés extérieurs (21) des côtés latéraux des noyaux de stator (2) en utilisant les buses de pulvérisation de colle (3) ;
3) après la solidification de la colle, l'obtention des noyaux de stator (2) requis.
